(19) Europäisches Patentamt / European Patent Office / Office européen des brevets

(11) **EP 4 462 462 A1**

(12) **EUROPEAN PATENT APPLICATION**

(43) Date of publication:
**13.11.2024   Bulletin 2024/46**

(21) Application number: **23173151.4**

(22) Date of filing: **12.05.2023**

(51) International Patent Classification (IPC):
**H01H 33/26** (2006.01)        **H01H 83/20** (2006.01)
**H02H 1/00** (2006.01)

(52) Cooperative Patent Classification (CPC):
**H01H 33/26; H02H 1/0023; H02H 1/063;**
H01H 9/50; H01H 2083/201

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG
5400 Baden (CH)**

(72) Inventors:
• **GENTSCH, Dietmar
  40882 Ratingen (DE)**
• **JAVORA, Radek
  664 62 Hrusovany u Brna (CZ)**

(74) Representative: **Maiwald GmbH
Engineering
Elisenhof
Elisenstrasse 3
80335 München (DE)**

(54) **CIRCUIT BREAKER SYSTEM WITH REDUCED OWN TIME: FAULT PROTECTION**

(57)     The present invention relates to a circuit breaker system, comprising:
- a solar cell (10);
- a circuit breaker (30);
- at least one energy storage unit (60); and
- an electromechanical actuator (70);
wherein the circuit breaker is configured to operate within a low voltage, medium voltage, or high voltage switchgear;
wherein the electromechanical actuator when driven is configured to activate the circuit breaker;
wherein the circuit breaker when activated is configured to stop current flow within at least one part of the low voltage, medium voltage, or high voltage switchgear; wherein one or more energy storage units of the at least one energy storage unit when activated are configured to release energy to drive the electromechanical actuator to activate the circuit breaker with reduced own time up to fault current interruption;
wherein the solar cell is configured to be located within a compartment of the low voltage, medium voltage, or high voltage switchgear; and
wherein the solar cell is configured to activate the at least one energy storage unit due to radiation from an electrical arc fault of the switchgear impinging upon the solar cell.

Fig. 5

**Description**

FIELD OF THE INVENTION

The present invention relates to a circuit breaker system for a low -, medium -, or high-voltage equipment.

BACKGROUND OF THE INVENTION

In conventional power systems, the design of low-, medium-, and/or high-voltage switchgears uses an internal arc mitigation system that disconnects the faulty circuit in case an electrical arc fault is observed. Disconnection is achieved by operation of a circuit breaker, which is triggered by some monitoring device analyzing defined variables.

For applications where occurrence of the internal arc fault is very critical and needs to be quickly mitigated, disconnection from the circuit by the circuit breaker might be too slow a process, and therefore additional equipments/systems can be utilized that provides fast earth connection of all phases before disconnection by the circuit breaker takes place. These additional equipments/systems are called active internal arc mitigation systems.

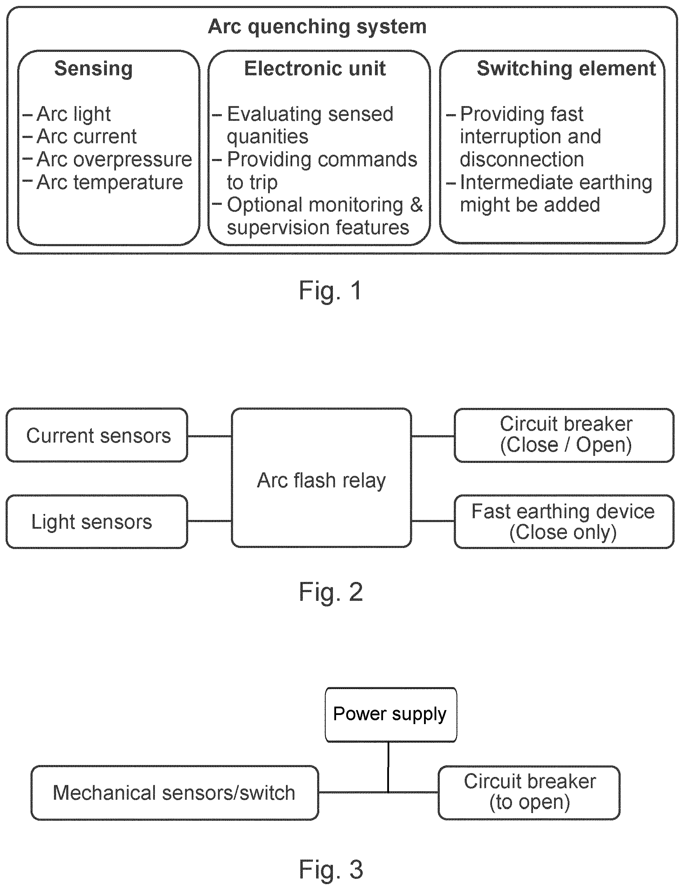

The trigger to the circuit breaker itself, disconnecting the faulty circuit, is provided from other parts of the protection system, based on measurement and/or detection of the arc-related phenomena. Fig. 1 provides a list of parts of arc quenching systems used today, that form a faulty circuit disconnecting, or arc quenching, system. This has a sensing part, that can sense, directly or indirectly, the arc light, the arc current, the arc overpressure, and the arc temperature, an electronic unit, that evaluates the sensed quantities, and provides trip commands, and that itself can carry out monitoring, and a switch element that provides fast interruption and/or disconnection.

A total duration of such an internal arc fault clearing system depends on response/activation times of all its components. The following equation provides a calculation of a total arc fault clearing time:

$$\text{time(sensing)} + \text{time(evaluation \& trigger command)} + \text{time(switching)} = \text{total arc fault clearing time}$$

where:

# time(sensing) is a time required by the sensing system to activate itself and/or to generate a corresponding output signal.

# time(evaluation & trigger command) is a time needed by the control system to analyze output signals from sensing devices and to provide a trigger switching command for the interruption element.

# time(switching) is a duration of disconnection or earthing process enabled by the circuit/actuator.

Some active arc mitigation systems use intermediate fast earthing components, that connects the faulty circuit quickly to the earth to reduce the arc impact. Such fast earthing however needs to be followed by a disconnection of the faulty circuit from the power supply, mainly by triggering an upstream circuit breaker to provide for circuit interruption.

**Internal arc faults result in:**

- High current flowing through the switchgear (overcurrent).
- Arc burning inside the switchgear (light).
- Rapid temperature rise (burning of material).
- Rapid over-pressure (release of hot gases/particles).

Therefore, triggering devices usually monitor or detect some of these quantities to recognize the arc fault early enough.

**The following arc flash sensors or their combinations are usually used today:**

# **Overcurrent sensor:** usually a standard current sensing device (conventional current transformer or low-power current transformer) detecting overcurrent condition above a certain threshold value. It is usually connected to the protection relay.

**# Light sensor:** optical sensor which detect "abnormal" light within switchgear. These sensors use an additional evaluation unit that can process the light signal and create a trigger signal if above the threshold value. These optical sensors are usually combined with current sensors to avoid unintentional tripping caused by other light sources.

**# Pressure sensors:** pressure sensors are used to detect pressure increase caused by an arc fault. Pressure sensors might be integrated in the switchgear wall or connected to it.

**# Mechanical sensors:** an over-pressure created by the arc fault may lead to some deformations or movements of dedicated parts of the switchgear, which can be used as a trip signal. These sensors might directly create the trigger, but other solutions using deformations to activate a contact can also be used.

**# Temperature sensors:** are usually slow in their response, thus are not typically used in active arc mitigation systems but are rather used for performance monitoring of the switchgear.

Fig. 2 shows a schematic representation of common solutions used today, based on current and light sensing. Current and light sensors provide signals to an arc flash relay that controls a circuit breaker and fast earthing device.

Nevertheless, the evaluation/electronic units used today lead to a considerable delay being introduced into the decision logic triggering the quenching devices. An example can be a need to convert an optical signal into an electrical one. Furthermore, the more complex the system is, the higher the costs are that might be associated with it.

More simple systems use for example a mechanical switch, sensing deformations of switchgear enclosure or exhaust plenum (gas duct), connected directly to a triggering circuit of the circuit breaker. This known solution is shown schematically in Fig. 3, where mechanical sensors/switch are connected directly to a circuit breaker, through an external power supply.

A disadvantage of this solution is, that mechanical the sensor will react only when a considerable overpressure has already been created, causing deformations to the switchgear enclosure or its internals. Furthermore, an external power supply or in-built energy storage is needed to activate the electromechanics trigger mechanism of the circuit breaker.

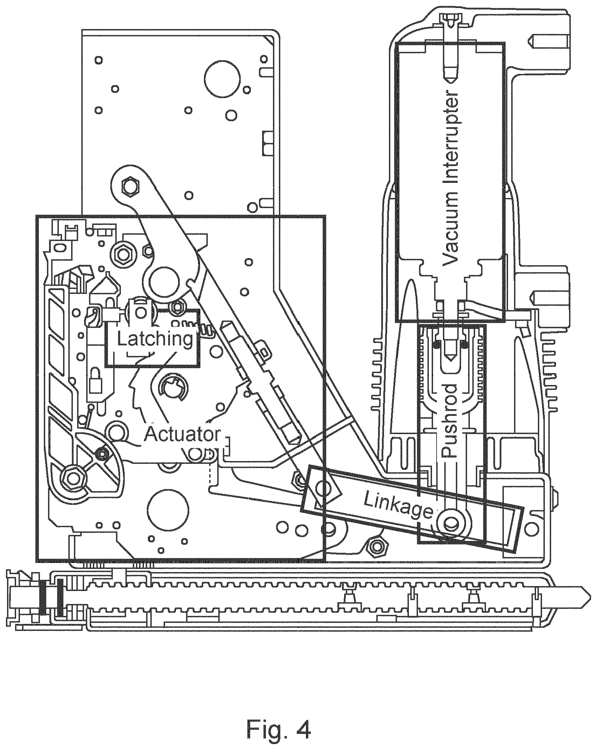

A standard circuit breaker CB is shown in Fig. 4. Apart from the time associated with a triggering circuit, a majority of the time taken to disconnect the circuit is taken by the CB mechanism itself (so called "own time of breaker mechanism"). The basic parts of the standard CB are visible in Fig 4. An actuator operates one or more vacuum interrupter(s) through the pushrod(s) and linkage connection(s). A standard time to switch off such a CB is given by a strength of the opening spring, all the mass (inertia) that needs to start moving as well as by the duration of the triggering circuit to unlock the latching mechanism in case a spring type CB is used. In case an electromechanical drive is chosen a similar, but a slightly shorter time, to open is given but still in the range of some 10ms time.

Therefore, there is a need to address the above issues and look for a simple solution, which does not introduce further delay in the decision process as well as to shorten the actuating time, providing total time of the entire device.

There is a need to address this issue.

SUMMARY OF THE INVENTION

Therefore, it would be advantageous to have an improved circuit breaker system in low-, medium- and high-voltage switchgears.

The object of the present invention is solved with the subject matter of the independent claims, wherein further embodiments are incorporated in the dependent claims.

In an aspect, there is provided a circuit breaker system, comprising:

- a solar cell;
- a circuit breaker;
- at least one energy storage unit; and
- an electromechanical actuator.

The circuit breaker is configured to operate within a low voltage, medium voltage, or high voltage switchgear. The electromechanical actuator when driven is configured to activate the circuit breaker. The circuit breaker when activated is configured to stop current flow within at least one part of the low voltage, medium voltage, or high voltage switchgear. One or more energy storage units of the at least one energy storage unit when activated are configured to release energy to drive the electromechanical actuator to activate the circuit breaker. The solar cell is configured to be located within a compartment of the low voltage, medium voltage, or high voltage switchgear. The solar cell is configured to activate the at least one energy storage unit due to radiation from an electrical arc fault of the switchgear impinging upon the solar cell.

The one or more energy storage units of the at least one energy storage unit when activated are configured to release energy to drive the electromechanical actuator to activate the circuit breaker with reduced own time up to fault current interruption.

In an example, the solar cell is configured to generate a current and/or voltage over a threshold current and/or voltage level to activate the at least one energy storage unit due to radiation from the electrical arc fault of the switchgear impinging upon the solar cell.

In an example, the circuit breaker system comprises:

- a latch system.

The latch system when locked is configured such that the electromechanical actuator cannot be driven to activate the circuit breaker. The latch system when unlocked is configured such that the electromechanical actuator can be driven to activate the circuit breaker. One or more energy storage units of the at least one energy storage unit when activated are configured to release energy to unlock the latch system.

In an example, the solar cell is directly connected to the one or more energy storage units.

In an example, the circuit breaker system comprises a merging unit (an electronic device). The merging unit is located within or associated or in line with the circuit breaker. The solar cell is directly connected to the merging unit. The merging unit is configured such that when activated the merging unit is configured to activate the at least one energy storage unit. The solar cell is configured to activate the at least one energy storage unit due to the radiation from the electrical arc fault of the switchgear impinging upon the solar cell.

In an example, the merging unit comprises a signal adaptation unit. The solar cell is configured to generate a signal due to radiation from the electrical arc fault of the switchgear impinging upon the solar cell. The signal adaptation unit is configured to adapt the signal from the solar cell to a signal appropriate to activate the at least one energy storage unit.

In an example, the circuit breaker system comprises an arc mitigation device. The arc mitigation device is configured to be mounted to the low voltage, medium voltage, or high voltage switchgear. The arc mitigation device when activated is configured to stop or limit current flow within at least one part of the low voltage, medium voltage, or high voltage switchgear. A further energy storage unit of the at least one energy storage unit when activated is configured to release energy to activate the arc mitigation device.

In an example, the signal adaptation unit is configured to adapt the signal from the solar cell to a signal appropriate to activate the further energy storage unit.

In an example, the at least one stored energy unit comprises one or more of a micro gas generator or a pressurized gas container or one or more springs or a Thomsen drive getting fast opening of breaker to reduce time between trigger signal and interruption of fault current.

In an aspect, there is provided a circuit breaker system, comprising:

- a plurality of solar cells;
- a circuit breaker;
- at least one energy storage unit; and
- an electromechanical actuator.

The circuit breaker is configured to operate within a low voltage, medium voltage, or high voltage switchgear. The electromechanical actuator when driven is configured to activate the circuit breaker. The circuit breaker when activated is configured to stop current flow within at least one part of the low voltage, medium voltage, or high voltage switchgear. One or more energy storage units of the at least one energy storage unit when activated are configured to release energy to drive the electromechanical actuator to activate the circuit breaker. The plurality of solar cells are configured to be located within at least one compartment of the low voltage, medium voltage, or high voltage switchgear. Each solar cell is configured to activate the at least one energy storage unit due to radiation from an electrical arc fault of the switchgear impinging upon the solar cell.

The one or more energy storage units of the at least one energy storage unit when activated are configured to release energy to drive the electromechanical actuator to activate the circuit breaker with reduced own time up to fault current interruption.

In an example, the circuit breaker system comprises:

- a latch system.

The latch system when locked is configured such that the electromechanical actuator cannot be driven to activate the circuit breaker. The latch system when unlocked is configured such that the electromechanical actuator can be driven to activate the circuit breaker. One or more energy storage units of the at least one energy storage unit when activated are configured to release energy to unlock the latch system.

In an example, the circuit breaker system comprises a merging unit. The merging unit is located within or associated or in line with the circuit breaker. Each solar cell is directly connected to the merging unit. The merging unit is configured such that when activated the merging unit is configured to activate the at least one energy storage unit. Each solar cell is configured to activate the at least one energy storage unit due to the radiation from the electrical arc fault of the switchgear impinging upon the solar cell.

In an aspect, there is provided a circuit breaker system, comprising:

-    a plurality of solar cells;
-    a circuit breaker;
-    at least one energy storage unit; and
-    an electromechanical actuator.

The circuit breaker is configured to operate within a low voltage, medium voltage, or high voltage switchgear. The electromechanical actuator when driven is configured to activate the circuit breaker. The circuit breaker when activated is configured to stop current flow within at least one part of the low voltage, medium voltage, or high voltage switchgear. One or more energy storage units of the at least one energy storage unit when activated are configured to release energy to drive the electromechanical actuator to activate the circuit breaker. The plurality of solar cells are configured to be located within at least one compartment of the low voltage, medium voltage, or high voltage switchgear. Two or more solar cells of the plurality of solar cells are configured to activate the at least one energy storage unit due to radiation from an electrical arc fault of the switchgear impinging upon the solar cell.

The one or more energy storage units of the at least one energy storage unit when activated are configured to release energy to drive the electromechanical actuator to activate the circuit breaker with reduced own time up to fault current interruption.

In an example, the circuit breaker system comprises:

-    a latch system.

The latch system when locked is configured such that the electromechanical actuator cannot be driven to activate the circuit breaker. The latch system when unlocked is configured such that the electromechanical actuator can be driven to activate the circuit breaker. One or more energy storage units of the at least one energy storage unit when activated are configured to release energy to unlock the latch system.

In an example, the circuit breaker system comprises a merging unit. The merging unit is located within or associated or in line with the circuit breaker. Each solar cell is directly connected to the merging unit. The merging unit is configured such that when activated the merging unit is configured to activate the at least one energy storage unit. Two or more solar cells of the plurality of solar cells are configured to activate the at least one energy storage unit due to the radiation from the electrical arc fault of the switchgear impinging upon the solar cell.

The above aspect and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows an example of general parts required by a known faulty circuit disconnection system;

Fig. 2 shows an example of a known active arc protection system based on current and light sensing;

Fig. 3 shows an example of a known passive arc protection system based on overpressure sensing;

Fig. 4 shows the basic elements of a conventional spring driven circuit breaker mechanism;

Fig. 5 shows an example of a new circuit breaker system;

Fig. 6 shows an example of a new circuit breaker system;

Fig. 7 shows an example of a new circuit breaker system;

Fig. 8 shows an example of a new circuit breaker system;

Fig. 9 shows an example of a new circuit breaker system;

Figs. 10a and 10b show examples of a new circuit breaker system;

Fig. 11 shows an example of a new circuit breaker system;

Fig. 12 shows an example of a new circuit breaker system;

Fig. 13 shows an example of a new circuit breaker system;

Fig. 14 shows an example of a new circuit breaker system; and

Fig. 15 shows an example of a new circuit breaker system.

DETAILED DESCRIPTION OF EMBODIMENTS

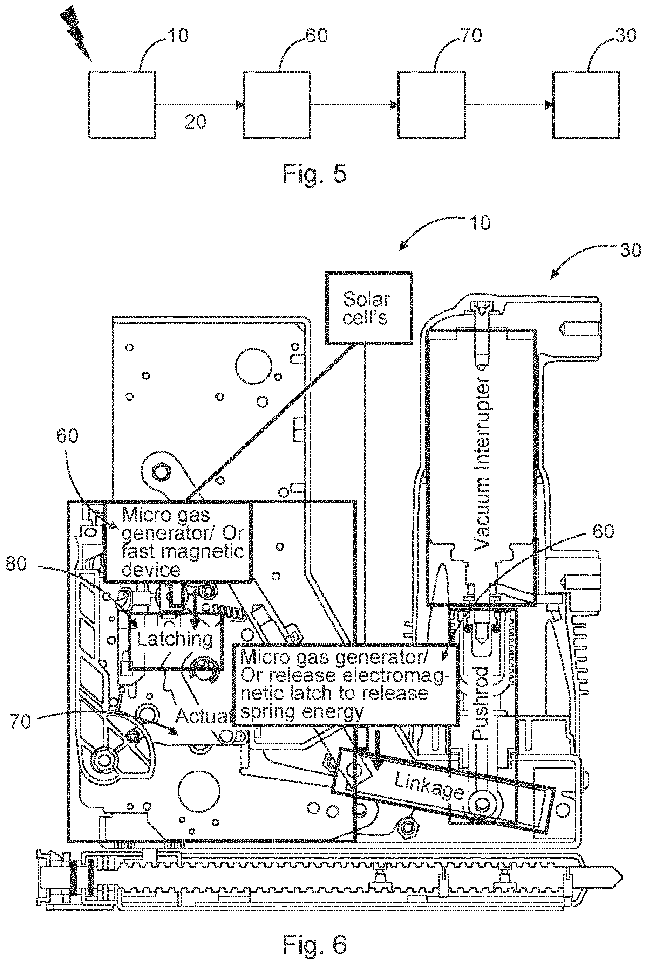

Figs. 5-15 relate to new circuit breaker systems for a low-, medium-, or high- voltage switchgear.

In an example, a circuit breaker system comprises a solar cell 10, a circuit breaker 30, at least one energy storage unit 60, and an electromechanical actuator 70. The circuit breaker is configured to operate within a low voltage, medium voltage, or high voltage switchgear. The electromechanical actuator when driven is configured to activate the circuit breaker. The circuit breaker when activated is configured to stop current flow within at least one part of the low voltage, medium voltage, or high voltage switchgear. One or more energy storage units of the at least one energy storage unit when activated are configured to release energy to drive the electromechanical actuator to activate the circuit breaker. The solar cell is configured to be located within a compartment of the low voltage, medium voltage, or high voltage switchgear. The solar cell is configured to activate the at least one energy storage unit due to radiation from an electrical arc fault of the switchgear impinging upon the solar cell.

The one or more energy storage units of the at least one energy storage unit when activated are configured to release energy to drive the electromechanical actuator to activate the circuit breaker with reduced own time up to fault current interruption. According to an example, the solar cell is configured to generate a current and/or voltage 20 over a threshold current and/or voltage level to activate the at least one energy storage unit due to radiation from the electrical arc fault of the switchgear impinging upon the solar cell.

In an example, the solar cell is configured such that radiation impinging upon the solar cell below a threshold intensity level is not sufficient to cause the at least one energy storage unit to activate.

An example, of such a circuit breaker system is shown in Figs. 5, 7, 9, 12, 13, 14 and 15. It is to be noted that 60 indicates one or more the energy storage units.

According to an example, the circuit breaker system comprises:

-   a latch system 80.

The latch system when locked is configured such that the electromechanical actuator cannot be driven to activate the circuit breaker. The latch system when unlocked is configured such that the electromechanical actuator can be driven to activate the circuit breaker. One or more energy storage units of the at least one energy storage unit when activated are configured to release energy to unlock the latch system.

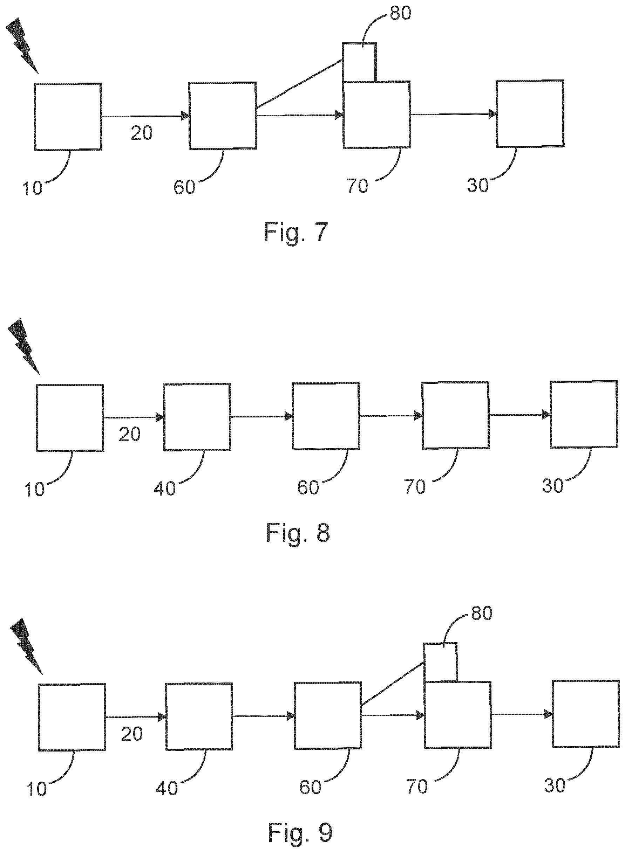

An example, of such a circuit breaker system is shown in Fig. 7, 9, 13 and 15. It is to be noted that 60 indicates one or more the energy storage units.

In an example, the one or more energy storage units of the at least one energy storage unit that when activated are configured to release energy to unlock the latch system are the same as the one or more energy storage units of the at least one energy storage unit that when activated are configured to release energy to drive the electromechanical actuator to activate the circuit breaker.

In an example, the one or more energy storage units of the at least one energy storage unit that when activated are configured to release energy to unlock the latch system are different to the one or more energy storage units of the at least one energy storage unit that when activated are configured to release energy to drive the electromechanical actuator to activate the circuit breaker.

According to an example, the solar cell is directly connected to the one or more energy storage units.

Examples of such circuit breaker systems are shown in Figs. 5, 7, 12, and 13. It is to be noted that 60 indicates one or more the energy storage units.

According to an example, the circuit breaker system comprises a merging unit 40. The merging unit is located within or associated or in line with the circuit breaker. The solar cell is directly connected to the merging unit. The merging unit is configured such that when activated the merging unit is configured to activate the at least one energy storage unit. The solar cell is configured to activate the at least one energy storage unit due to the radiation from the electrical arc fault of the switchgear impinging upon the solar cell.

Thus, the solar cell senses arc light, and provides "self-powered" energy. The merging unit, which can also be termed a merging and triggering unit, collects the energy output from the solar cell, and adapts the signal to one or energy storage units to activate them, and provides the solar cell monitoring and supervision. The circuit breaker then provides for interruption and disconnecting the faulty circuit.

According to an example, the merging unit comprises a signal adaptation unit. The solar cell is configured to generate a signal due to radiation from the electrical arc fault of the switchgear impinging upon the solar cell. The signal adaptation unit is configured to adapt the signal from the solar cell to a signal appropriate to activate the at least one energy storage unit.

Examples of such circuit breaker systems are shown in Figs. 8, 9, 14, and 15. It is to be noted that 60 indicates one or more the energy storage units.

According to an example, the circuit breaker system comprises an arc mitigation device 50. The arc mitigation device is configured to be mounted to the low voltage, medium voltage, or high voltage switchgear. The arc mitigation device when activated is configured to stop or limit current flow within at least one part of the low voltage, medium voltage, or high voltage switchgear. A further energy storage unit of the at least one energy storage unit when activated is configured to release energy to activate the arc mitigation device.

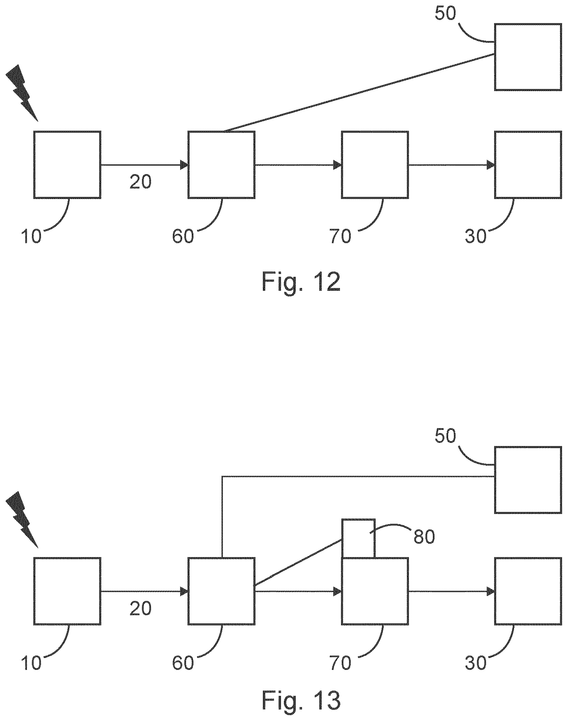

Examples of such circuit breaker systems are shown in Figs. 12, 13, 14 and 15. It is to be noted that 60 indicates one or more the energy storage units. The circuit breaker then provides for interruption and disconnecting the faulty circuit. The arc mitigation unit, also termed a fast-earthing switch, provides for intermediate earthing.

According to an example, the signal adaptation unit is configured to adapt the signal from the solar cell to a signal appropriate to activate the further energy storage unit.

Thus, the merging unit, collects the energy output from the solar cell, and adapts the signal to one or energy storage units to activate them to drive a circuit breaker and to activate an arc mitigation device that can provide intermediate protection before the circuit breaker operates.

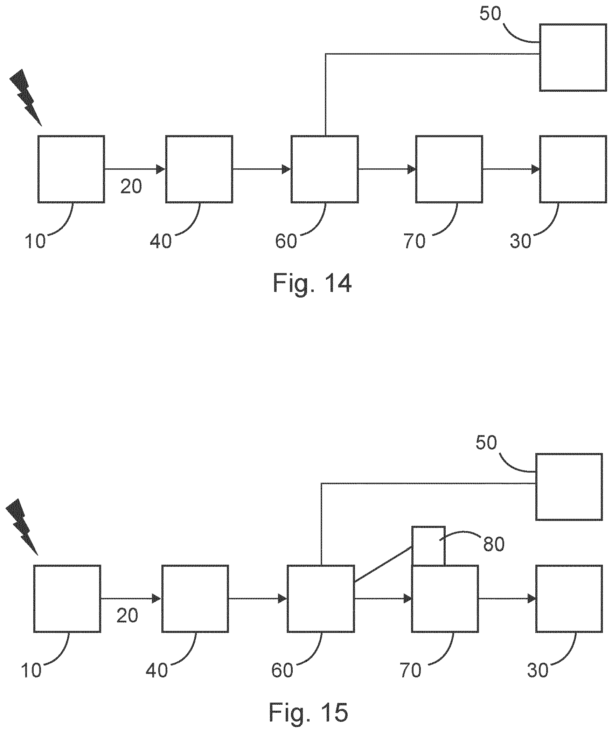

An example, of such a circuit breaker system is shown in Figs. 14 and 15. It is to be noted that 60 indicates one or more the energy storage units.

According to an example, the at least one stored energy unit comprises one or more of a micro gas generator or a pressurized gas container or one or more springs or a Thomsen drive getting fast opening of breaker to reduce time between trigger signal and interruption of fault current.

In an example, the arc mitigation device when activated is configured to make a connection between a part of the switchgear and the ground potential.

In an example, the arc mitigation device when activated is configured to make a connection between two phases of the switchgear.

In an example, the arc mitigation device is an Ultra-Fast-Earthing-Switch "UFES".

In an example, a circuit breaker system comprises a plurality of solar cells 10, a circuit breaker 30, at least one energy storage unit 60, and an electromechanical actuator 70. The circuit breaker is configured to operate within a low voltage, medium voltage, or high voltage switchgear. The electromechanical actuator when driven is configured to activate the circuit breaker. The circuit breaker when activated is configured to stop current flow within at least one part of the low voltage, medium voltage, or high voltage switchgear. One or more energy storage units of the at least one energy storage unit when activated are configured to release energy to drive the electromechanical actuator to activate the circuit breaker. The plurality of solar cells are configured to be located within at least one compartment of the low voltage, medium voltage, or high voltage switchgear. Each solar cell is configured to activate the at least one energy storage unit due to radiation from an electrical arc fault of the switchgear impinging upon the solar cell.

The one or more energy storage units of the at least one energy storage unit when activated are configured to release energy to drive the electromechanical actuator to activate the circuit breaker with reduced own time up to fault current interruption.

In an example, each solar cell is configured to generate a current and/or voltage 20 over a threshold current and/or voltage level to activate the at least one energy storage unit due to radiation from the electrical arc fault of the switchgear impinging upon the solar cell.

In an example, each solar cell is configured such that radiation impinging upon the solar cell below a threshold intensity level is not sufficient to cause the at least one energy storage unit to activate.

An example, of such a circuit breaker system is shown in Figs. 5, 7, 9, 12, 13, 14 and 15, where now a plurality of solar cells are indicated at 10. It is to be noted that 60 indicates one or more the energy storage units.

According to an example, the circuit breaker system comprises:

- a latch system 80.

The latch system when locked is configured such that the electromechanical actuator cannot be driven to activate the circuit breaker. The latch system when unlocked is configured such that the electromechanical actuator can be driven to activate the circuit breaker. One or more energy storage units of the at least one energy storage unit when activated are configured to release energy to unlock the latch system.

An example, of such a circuit breaker system is shown in Fig. 7, 9, 13 and 15, where now a plurality of solar cells are indicated at 10. It is to be noted that 60 indicates one or more the energy storage units.

In an example, the one or more energy storage units of the at least one energy storage unit that when activated are configured to release energy to unlock the latch system are the same as the one or more energy storage units of the at least one energy storage unit that when activated are configured to release energy to drive the electromechanical actuator to activate the circuit breaker.

In an example, the one or more energy storage units of the at least one energy storage unit that when activated are configured to release energy to unlock the latch system are different to the one or more energy storage units of the at least one energy storage unit that when activated are configured to release energy to drive the electromechanical actuator to activate the circuit breaker.

In an example, each solar cell is directly connected to the one or more energy storage units.

Examples of such circuit breaker systems are shown in Figs. 5, 7, 12, and 13, where now a plurality of solar cells are indicated at 10. It is to be noted that 60 indicates one or more the energy storage units.

According to an example, the circuit breaker system comprises a merging unit 40. The merging unit is located within or associated or in line with the circuit breaker. Each solar cell is directly connected to the merging unit. The merging unit is configured such that when activated the merging unit is configured to activate the at least one energy storage unit. Each solar cell is configured to activate the at least one energy storage unit due to the radiation from the electrical arc fault of the switchgear impinging upon the solar cell.

Thus, the solar cell senses arc light, and provides "self-powered" energy. The merging unit, which can also be termed a merging and triggering unit, collects the energy output from each solar cell, and adapts the signal to one or more energy storage units to activate them based on the first signal received, and provides the solar cell monitoring and supervision. The circuit breaker then provides for interruption and disconnecting the faulty circuit.

In an example, the merging unit comprises a signal adaptation unit. Each solar cell is configured to generate a signal due to radiation from the electrical arc fault of the switchgear impinging upon the solar cell. The signal adaptation unit is configured to adapt the signal from the solar cell to a signal appropriate to activate the at least one energy storage unit.

Examples of such circuit breaker systems are shown in Figs. 8, 9, 14, and 15, where now a plurality of solar cells are indicated at 10. It is to be noted that 60 indicates one or more the energy storage units.

In an example, the circuit breaker system comprises an arc mitigation device 50. The arc mitigation device is configured to be mounted to the low voltage, medium voltage, or high voltage switchgear. The arc mitigation device when activated is configured to stop or limit current flow within at least one part of the low voltage, medium voltage, or high voltage switchgear. A further energy storage unit of the at least one energy storage unit when activated is configured to release energy to activate the arc mitigation device.

Examples of such circuit breaker systems are shown in Figs. 12, 13, 14 and 15, where now a plurality of solar cells are indicated at 10. It is to be noted that 60 indicates one or more the energy storage units. The circuit breaker then provides for interruption and disconnecting the faulty circuit. The arc mitigation unit, also termed a fast-earthing switch, provides for intermediate earthing.

In an example, the signal adaptation unit is configured to adapt the signal from each solar cell to a signal appropriate to activate the further energy storage unit.

An example, of such a circuit breaker system is shown in Figs. 14 and 15, where now a plurality of solar cells are indicated at 10. It is to be noted that 60 indicates one or more the energy storage units.

In an example, the at least one stored energy unit comprises one or more of a micro gas generator or a pressurized gas container or one or more springs or a Thomsen drive getting fast opening of breaker to reduce time between trigger signal and interruption of fault current.

In an example, the arc mitigation device when activated is configured to make a connection between a part of the switchgear and the ground potential.

In an example, the arc mitigation device when activated is configured to make a connection between two phases of the switchgear.

In an example, the arc mitigation device is an Ultra-Fast-Earthing-Switch "UFES".

In an example, a circuit breaker system comprises a plurality of solar cells 10, a circuit breaker 30, at least one energy storage unit 60, and an electromechanical actuator 70. The circuit breaker is configured to operate within a low voltage, medium voltage, or high voltage switchgear. The electromechanical actuator when driven is configured to activate the circuit breaker. The circuit breaker when activated is configured to stop current flow within at least one part of the low voltage, medium voltage, or high voltage switchgear. One or more energy storage units of the at least one energy storage unit when activated are configured to release energy to drive the electromechanical actuator to activate the circuit breaker. The plurality of solar cells are configured to be located within at least one compartment of the low voltage, medium voltage, or high voltage switchgear. Two or more solar cells of the plurality of solar cells are configured to activate the at least one energy storage unit due to radiation from an electrical arc fault of the switchgear impinging upon the solar cell.

The one or more energy storage units of the at least one energy storage unit when activated are configured to release energy to drive the electromechanical actuator to activate the circuit breaker with reduced own time up to fault current interruption.

In an example, each solar cell is configured to generate a current and/or voltage 20 over a threshold current and/or voltage level to activate the at least one energy storage unit due to radiation from the electrical arc fault of the switchgear impinging upon the solar cell.

In an example, each solar cell is configured such that radiation impinging upon the solar cell below a threshold intensity level is not sufficient to cause the at least one energy storage unit to activate.

An example, of such a circuit breaker system is shown in Figs. 5, 7, 9, 12, 13, 14 and 15, where now a plurality of solar cells are indicated at 10. It is to be noted that 60 indicates one or more the energy storage units.

According to an example, the circuit breaker system comprises:

- a latch system 80.

The latch system when locked is configured such that the electromechanical actuator cannot be driven to activate the circuit breaker. The latch system when unlocked is configured such that the electromechanical actuator can be driven to activate the circuit breaker. One or more energy storage units of the at least one energy storage unit when activated are configured to release energy to unlock the latch system.

An example, of such a circuit breaker system is shown in Fig. 7, 9, 13, and 15, where now a plurality of solar cells are indicated at 10. It is to be noted that 60 indicates one or more the energy storage units.

In an example, the one or more energy storage units of the at least one energy storage unit that when activated are configured to release energy to unlock the latch system are the same as the one or more energy storage units of the at least one energy storage unit that when activated are configured to release energy to drive the electromechanical actuator to activate the circuit breaker.

In an example, the one or more energy storage units of the at least one energy storage unit that when activated are configured to release energy to unlock the latch system are different to the one or more energy storage units of the at least one energy storage unit that when activated are configured to release energy to drive the electromechanical actuator to activate the circuit breaker.

In an example, each solar cell is directly connected to the one or more energy storage units.

Examples of such circuit breaker systems are shown in Figs. 5, 7, 12, and 13, where now a plurality of solar cells are indicated at 10. It is to be noted that 60 indicates one or more the energy storage units.

According to an example, the circuit breaker system comprises a merging unit 40. The merging unit is located within or associated or in line with the circuit breaker. Each solar cell is directly connected to the merging unit. The merging unit is configured such that when activated the merging unit is configured to activate the at least one energy storage unit. Two or more solar cells of the plurality of solar cells are configured to activate the at least one energy storage unit due to the radiation from the electrical arc fault of the switchgear impinging upon the solar cell.

Thus, the solar cell senses arc light, and provides "self-powered" energy. The merging unit, which can also be termed a merging and triggering unit, collects the energy output from each solar cell. The merging unit then assesses more than one signal from solar cells, that each could be below a threshold that individually would lead to downstream activation to drive the circuit breaker, but each could have a high enough signal that it is determined that that the circuit breaker should operate. For example, a problem has developed that at that moment in time is not a serious problem but there is a likelihood that a critical problem will develop in the next time instance, and a decision is made now based on signals from multiple solar cells to drive the circuit breaker to cut current flow. The merging unit then provides an appropriate signal to one or energy storage units to activate them and provides the solar cell monitoring and supervision. The circuit breaker then provides for interruption and disconnecting the faulty circuit.

In an example, the merging unit comprises a signal adaptation unit. Each solar cell is configured to generate a signal due to radiation from the electrical arc fault of the switchgear impinging upon the solar cell. The signal adaptation unit is configured to adapt the signal from two or more solar cells of the plurality of solar cell to a signal appropriate to activate the at least one energy storage unit.

Examples of such circuit breaker systems are shown in Figs. 8, 9, 14, and 15, where now a plurality of solar cells are indicated at 10. It is to be noted that 60 indicates one or more the energy storage units.

In an example, the circuit breaker system comprises an arc mitigation device 50. The arc mitigation device is configured to be mounted to the low voltage, medium voltage, or high voltage switchgear. The arc mitigation device when activated is configured to stop or limit current flow within at least one part of the low voltage, medium voltage, or high voltage switchgear. A further energy storage unit of the at least one energy storage unit when activated is configured to release energy to activate the arc mitigation device.

Examples of such circuit breaker systems are shown in Figs. 12, 13, 14 and 15, where now a plurality of solar cells are indicated at 10. It is to be noted that 60 indicates one or more the energy storage units. The circuit breaker then provides for interruption and disconnecting the faulty circuit. The arc mitigation unit, also termed a fast-earthing switch, provides for intermediate earthing.

In an example, the signal adaptation unit is configured to adapt the signal from two or more solar cells of the plurality of solar cells to a signal appropriate to activate the further energy storage unit.

An example, of such a circuit breaker system is shown in Figs. 14 and 15, where now a plurality of solar cells are indicated at 10. It is to be noted that 60 indicates one or more the energy storage units.

In an example, the at least one stored energy unit comprises one or more of a micro gas generator or a pressurized gas container or one or more springs or a Thomsen drive getting fast opening of breaker to reduce time between trigger signal and interruption of fault current.

In an example, the arc mitigation device when activated is configured to make a connection between a part of the switchgear and the ground potential.

In an example, the arc mitigation device when activated is configured to make a connection between two phases of the switchgear.

In an example, the arc mitigation device is an Ultra-Fast-Earthing-Switch "UFES".

The circuit breaker systems are now described in specific detail with respect to detailed embodiments, where again reference is made to Figs. 5-15.

As shown in Fig. 5 a solar cell or cells 10 (providing the energy self-powered by the internal arc), is directly connected to one or more energy storage units (60) that drive an electromechanical actuator 70, or at least one or more parts of the electromechanical actuator 70, that then activates the rest of the circuit breaker 30. Thus, during arc-fault event the circuit breaker disconnection is significantly speeded up.

The solar cell is sensing the light of the arc and thus can be very fast. And at least part of energy required for fast disconnection of the circuit breaker 30 is provided by mechanical parts of a micro gas generator (MGG - chemical load) 60 (integrated within circuit breaker body) that is triggered by the power coming from relay or directly by the solar cell(s) 10, see Fig. 6.

Thus, the new technique uses a micro gas generator / or release electromagnetic latch 60 to release spring energy which is, when activated by a solar cell 10, pushes the linkage of an electromechanical actuator 70 to actuate the vacuum interrupter (circuit breaker) 30 in an extremely short reaction time. The solar cell 10 is sensing the light of the internal arc and thus can be very fast, without the need to develop the arc too much. If directly connected to the micro gas generator or release electromagnetic latch to release spring energy which starts pushing the linkage of the circuit breaker, clearing time will be extremely short.

An advantage is that faster sensing is provided with no involvement of other parts, providing a fully passive and analog solution (with no external power supply needed) and direct triggering of the linkage of an electromechanical actuator within a circuit breaker (without waiting for its own actuating mechanism to react). Thus, a circuit breaker is used or disconnection of the faulty circuit in a similar fashion as done today, nevertheless instead of using multiple sensing devices (e.g., current, and light sensors) and evaluation units (light sensor relay) and generating the trip signal (e.g. protection relay) to at least one circuit breaker, a solar cell is used advantageously directly. Such a technique significantly reduces the arc detection and trigger time.

As shown in Fig. 9, a micro gas generator 60 can be triggered by the solar cell to drive an electromechanical actuator 70 to activate the circuit breaker, and at the same time this micro gas generator 60 or another micro gas generator 60 can also be triggered by the solar cell to release or unlock a latch mechanism 80 of the electromechanical actuator 70, thereby enabling it to be driven. That can be done by pressured gas driven gas generator by release of an additionally installed spring (pre-loaded and can be released in this case) or by Thomson drive with pre-loaded capacitor.

A more sophisticated embodiment of such a system can also include other parts, such as merging unit, see Fig. 9.

It can have one or multiple features, such as:

- Signal adaptation from at least one solar cell to fit the trigger circuit demands of at least one of the CB.
- Collection of inputs from several solar-cells and providing single trigger to at least one CB.
- Tracking faulty signal (recognize & record which solar cell has been activated first, so the place of internal arc origin can be easily identified).
- Monitoring and/or self-supervision of the unit or the whole circuit or system. - Interlocking with other devices.
- Communication to other devices.
- External power supply.

Again, as shown in Fig. 9, a latch 80 of the electromechanical actuator 70 can also be released or unlocked.

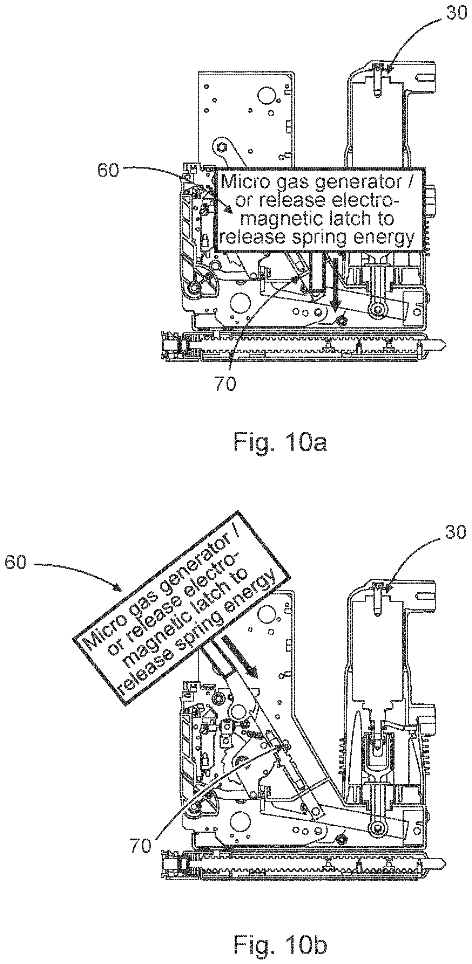

Figs. 10a and 10b show different possible positions of the micro gas generator or generators 60. As shown the position of micro gas generator or release device of potential energy (latching and spring energy) (moving the linkage) within the CB actuating mechanism may vary. Figs 10a and 10b show possibilities of such placement, that are not exhaustive. A magnetic drive can be instead chosen and be also driven from chemical charge or mechanical stored potential energy. Thus, here an electromechanical actuator 70 can be a mechanical actuator 70 or another type of actuator such as a magnetic actuator.

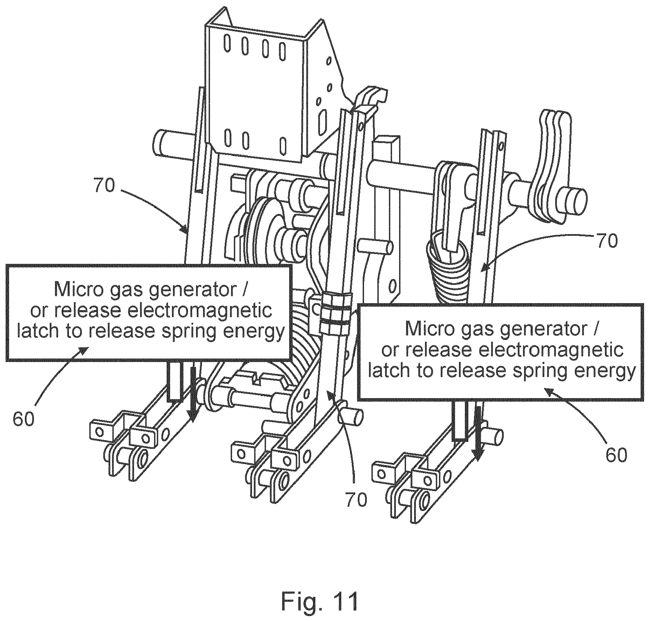

There can be even more than one micro gas generator / or release electromagnetic latch 60 to release spring energy involved, in order to reduce load on one particular part of the linkage of the electromechanical actuator 70. Examples are provided in Fig. 11, that shows examples of possible location of several micro gas generators / or release electromagnetic latch to release spring energy.

The micro gas generator / or release electromagnetic latch to release spring energy can be placed inside the circuit breaker actuating mechanism or enclosure or also outside (with possibility of mechanical connection to the linkage). In either case, enabling easy replacement (or re-setting in case of pre-loaded spring) after actuation is preferred. A magnetic drive or a hybrid mechanism can be actuated in a similar way. In order to make such movement in a spring driven mechanism of the linkage even possible, a de-latching occurs first, i.e. release the latching mechanism from its locked position. This can be done by a separate or the same micro gas generator and / or release electromagnetic latch to release spring energy.

Furthermore, the system can be further finetuned and use the solar cell(s) 10 with an analogue merging unit 40 to supply trigger and/or energy/power to also at least one fast-earthing switch (also called an arc mitigation device), see Fig. 13-15. In the unlikely event of electric internal arc within the switchgear, the fast-earthing switch, or switches as well as circuit breaker or circuit breakers triggering circuit(s) are activated all at the same time, but due to the design or technology of actuating mechanism the fast-earthing switch(es) is earthing the faulty circuit first, followed by disconnection done by the upstream circuit breaker and/or other circuit breakers as well. Again, as shown in Fig. 13 and 15, a latch mechanism 80 can be driven to release the electromechanical actuator 70 so that it can drive the circuit breaker 30. However, as shown in fig. Fig. 14 the merging unit 40 is not essential for driving of the arc mitigation device (fast earthing switch) 50 for providing intermediate earthing.

An advantage of the new development is to be seen in its modular approach. The same solar cell(s) and merging unit can be used in connection with the circuit breaker only (fast disconnection of the faulty circuit) or independently from the circuit breaker connected to the fast-earthing switch (very fast earthing for safety reasons) or both. The same development can be used for single phase actuated VIs/CBs or multi-phase actuated ones.

Thus, the new development replaces complex and/or slower systems for detecting an internal arc in low-, medium-, or high- voltage switchgear by a solar cell. Such a solar cell is a self-powered device and generates the energy from the internal arc. The Solar cell enables the circuit breaker to be driven directly, and therefore activation of this breaker is not further delayed by any additional devices and arc impact on the switchgear is minimized.

The inventors realised they could develop a circuit breaker system that only uses a solar-cell to obtain the light and the fault arc current information to make a reliable trip by the production of enough energy from the solar-cell, only in the situation when such fault mitigation is required, in order to activate a circuit breaker and optionally also an arc mitigation device.

It was realised that in the case of an arc fault, the light produced that can be considered to be "Light and "Current" information" can be utilized to trigger a circuit breaker and optionally also an arc mitigation device without any monitoring of arc fault current. It was realised that in the case of an arc fault the light emission is strong enough that the solar cell will produce enough energy (around 5 ... 10 times more than provide by typically given strong sunshine impinging) which exceeds a given threshold value to initiate activation of the circuit breaker and optionally also the arc mitigation device. At the same time, standard light, ambient light or flashlight cannot produce, via the solar cell, enough energy to trip the circuit breaker or the arc mitigation device.

Thus, currently the detection of an internal arc fault inside a switchgear / circuit is done by means of an optical arc flash sensor, which triggers an external power supplied electronic device with a charged capacitor to actuate the active primary arc mitigation device, and this is linked with determination of a current threshold value. Or slow mechanical based sensing is carried out.

However, now with the new apparatus developed by the inventors, there is no need to detect both the current and the light together because the arc fault itself is used to generate enough power to trigger the circuit breaker and optionally an arc mitigation device, and there is no need to separately activate systems to release the circuit breaker for activation and then activating the circuit breaker. The new technique using a solar-cell triggers and powers the trigger of the circuit breaker and optionally that of the arc mitigation device within less than 4-5ms in the situation of arc fault currents above typical values of 2kA.

The new technique provides for extremely short operation time of the primary arc mitigation devices within less than 2-3ms in the case of fault arc currents above 2kA current, in conjunction with the rapid and reliable detection of the fault, leads to the arc fault being extinguished almost immediately after it arises.

A solar-cell such as a monocrystalline-Si unit (or other solar-cell) can be selected, based on fast and durable analogue technology, to provide for a reliable, robust, and fast function.

Thus, the new technique provides for threshold tripping only in the case of an arc fault. All other light sources (sunlight, lamps) (flashlight current is excluded in loop by electronic device in the triggering circuit) do not provide enough energy to the solar cell to provide enough power to trip the circuit breaker and optionally the arc mitigation device. With this selective technique an unwanted operation of the circuit breaker and the arc mitigation device will be avoided.

The solar cell monitors the switchgear (the circuit) on a continuous and autonomous basis without being influenced by these external light sources. This approach ensures continuous, complete equipment and personnel protection all the time, even during maintenance operations.

As detailed above, the new circuit breaker system for a low voltage, medium voltage, or high voltage switchgear detects and eliminates the arc fault in low- and medium- and high- voltage switchgear. The technique is simple and flexible and can be adapted to different switchgear configurations and ensures personnel safety and faster repair of the switchgear in the case of an internal arc fault.

The new system can be part of newly built switchgear but can also be retrofitted to already installed switchgears arrangements.

It is also to be noted that reference to switchgear is mentioned, but the new apparatus can be utilized for example in converters (DC-grid) as well.

## Claims

1.  A circuit breaker system, comprising:

    - a solar cell (10);
    - a circuit breaker (30);
    - at least one energy storage unit (60); and
    - an electromechanical actuator (70);

    wherein the circuit breaker is configured to operate within a low voltage, medium voltage, or high voltage switchgear;
    wherein the electromechanical actuator when driven is configured to activate the circuit breaker;
    wherein the circuit breaker when activated is configured to stop current flow within at least one part of the low voltage, medium voltage, or high voltage switchgear;
    wherein one or more energy storage units of the at least one energy storage unit when activated are configured to release energy to drive the electromechanical actuator to activate the circuit breaker;
    wherein the solar cell is configured to be located within a compartment of the low voltage, medium voltage, or high voltage switchgear; and
    wherein the solar cell is configured to activate the at least one energy storage unit due to radiation from an electrical arc fault of the switchgear impinging upon the solar cell.

2.  Circuit breaker system according to claim 1, wherein the solar cell is configured to generate a current and/or voltage (20) over a threshold current and/or voltage level to activate the at least one energy storage unit due to radiation from the electrical arc fault of the switchgear impinging upon the solar cell.

3.  Circuit breaker system according to any of claims 1-2, wherein the circuit breaker system comprises:

    - a latch system (80);
    wherein the latch system when locked is configured such that the electromechanical actuator cannot be driven to activate the circuit breaker, and the latch system when unlocked is configured such that the electromechanical actuator can be driven to activate the circuit breaker, and wherein one or more energy storage units of the at least one energy storage unit when activated are configured to release energy to unlock the latch system.

4. Circuit breaker system according to any of claims 1-3, wherein the solar cell is directly connected to the one or more energy storage units.

5. Circuit breaker system according to any of claims 1-2, wherein the circuit breaker system comprises a merging unit (40), and wherein the merging unit is located within or associated or in line with the circuit breaker, and wherein the solar cell is directly connected to the merging unit, and wherein the merging unit is configured such that when activated the merging unit is configured to activate the at least one energy storage unit, and wherein the solar cell is configured to activate the at least one energy storage unit due to the radiation from the electrical arc fault of the switchgear impinging upon the solar cell.

6. Circuit breaker system according to claim 5, wherein the merging unit comprises a signal adaptation unit, wherein the solar cell is configured to generate a signal due to radiation from the electrical arc fault of the switchgear impinging upon the solar cell, and wherein the signal adaptation unit is configured to adapt the signal from the solar cell to a signal appropriate to activate the at least one energy storage unit.

7. Circuit breaker system according to any of claims 1-6, wherein the circuit breaker system comprises an arc mitigation device (50), wherein the arc mitigation device is configured to be mounted to the low voltage, medium voltage, or high voltage switchgear, wherein the arc mitigation device when activated is configured to stop or limit current flow within at least one part of the low voltage, medium voltage, or high voltage switchgear, and wherein a further energy storage unit of the at least one energy storage unit when activated is configured to release energy to activate the arc mitigation device.

8. Circuit breaker according to claim 7, when dependent upon claim 6, wherein the signal adaptation unit is configured to adapt the signal from the solar cell to a signal appropriate to activate the further energy storage unit.

9. Circuit breaker system according to any of claims 1-8, wherein the at least one stored energy unit comprises one or more of a micro gas generator or a pressurized gas container or one or more springs or a Thomson drive.

10. A circuit breaker system, comprising:

   - a plurality of solar cells (10);

      - a circuit breaker (30);
      - at least one energy storage unit (60); and
      - an electromechanical actuator (70);

         wherein the circuit breaker is configured to operate within a low voltage, medium voltage, or high voltage switchgear;
         wherein the electromechanical actuator when driven is configured to activate the circuit breaker;
         wherein the circuit breaker when activated is configured to stop current flow within at least one part of the low voltage, medium voltage, or high voltage switchgear;
         wherein one or more energy storage units of the at least one energy storage unit when activated are configured to release energy to drive the electromechanical actuator to activate the circuit breaker;
         wherein the plurality of solar cells are configured to be located within at least one compartment of the low voltage, medium voltage, or high voltage switchgear; and
         wherein each solar cell is configured to activate the at least one energy storage unit due to radiation from an electrical arc fault of the switchgear impinging upon the solar cell.

11. Circuit breaker system according to claim 10, wherein the circuit breaker system comprises:

   - a latch system (80);

      wherein the latch system when locked is configured such that the electromechanical actuator cannot be driven to activate the circuit breaker, and the latch system when unlocked is configured such that the electromechanical actuator can be driven to activate the circuit breaker, and wherein one or more energy storage units of the at least one energy storage unit when activated are configured to release energy to unlock the latch system.

**12.** Circuit breaker system according to any of claims 10-11, wherein the circuit breaker system comprises a merging unit (40), and wherein the merging unit is located within or associated or in line with the circuit breaker, and wherein each solar cell is directly connected to the merging unit, and wherein the merging unit is configured such that when activated the merging unit is configured to activate the at least one energy storage unit, and wherein each solar cell is configured to activate the at least one energy storage unit due to the radiation from the electrical arc fault of the switchgear impinging upon the solar cell.

**13.** A circuit breaker system, comprising:

- a plurality of solar cells (10);
- a circuit breaker (30);
- at least one energy storage unit (60); and
- an electromechanical actuator (70);

wherein the circuit breaker is configured to operate within a low voltage, medium voltage, or high voltage switchgear;

wherein the electromechanical actuator when driven is configured to activate the circuit breaker;

wherein the circuit breaker when activated is configured to stop current flow within at least one part of the low voltage, medium voltage, or high voltage switchgear;

wherein one or more energy storage units of the at least one energy storage unit when activated are configured to release energy to drive the electromechanical actuator to activate the circuit breaker;

wherein the plurality of solar cells are configured to be located within at least one compartment of the low voltage, medium voltage, or high voltage switchgear; and

wherein two or more solar cells of the plurality of solar cells are configured to activate the at least one energy storage unit due to radiation from an electrical arc fault of the switchgear impinging upon the solar cell.

**14.** Circuit breaker system according to claim 13, wherein the circuit breaker system comprises:

- a latch system (80);

wherein the latch system when locked is configured such that the electromechanical actuator cannot be driven to activate the circuit breaker, and the latch system when unlocked is configured such that the electromechanical actuator can be driven to activate the circuit breaker, and wherein one or more energy storage units of the at least one energy storage unit when activated are configured to release energy to unlock the latch system.

**15.** Circuit breaker system according to any of claims 13-14, wherein the circuit breaker system comprises a merging unit (40), and wherein the merging unit is located within or associated or in line with the circuit breaker, and wherein each solar cell is directly connected to the merging unit, and wherein the merging unit is configured such that when activated the merging unit is configured to activate the at least one energy storage unit, and wherein two or more solar cells of the plurality of solar cells are configured to activate the at least one energy storage unit due to the radiation from the electrical arc fault of the switchgear impinging upon the solar cell.

**Arc quenching system**

| Sensing | Electronic unit | Switching element |
|---|---|---|
| – Arc light<br>– Arc current<br>– Arc overpressure<br>– Arc temperature | – Evaluating sensed quanities<br>– Providing commands to trip<br>– Optional monitoring & supervision features | – Providing fast interruption and disconnection<br>– Intermediate earthing might be added |

Fig. 1

| Current sensors | | Arc flash relay | | Circuit breaker (Close / Open) |
|---|---|---|---|---|
| Light sensors | | | | Fast earthing device (Close only) |

Fig. 2

Power supply

| Mechanical sensors/switch | Circuit breaker (to open) |
|---|---|

Fig. 3

Fig. 4

Fig. 5

Fig. 6

80

20

10    60    70    30

Fig. 7

20

10    40    60    70    30

Fig. 8

80

20

10    40    60    70    30

Fig. 9

30

60

Micro gas generator /
or release electromagnetic latch to
release spring energy

70

Fig. 10a

60

Micro gas generator /
or release electromagnetic latch to
release spring energy

30

70

Fig. 10b

Fig. 11

Fig. 12

Fig. 13

50

20

10    40    60    70    30

Fig. 14

50

80

20

10    40    60    70    30

Fig. 15

Europäisches
Patentamt

European
Patent Office

Office européen
des brevets

# EUROPEAN SEARCH REPORT

**Application Number**

EP 23 17 3151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 089 866 A1 (ABB SCHWEIZ AG [CH]) 16 November 2022 (2022-11-16) * paragraphs [0018], [0035]; claims 5, 7, 8, 12; figure 1 * | 1-9 | INV. H01H33/26 H01H83/20 H02H1/00 |
| X | US 6 693 438 B2 (EATON CORP [US]) 17 February 2004 (2004-02-17) * column 4, line 11 – column 5, line 2 * * column 5, lines 14-17 * * column 5, line 50 – column 6, line 14 * * figures 3, 4A, 4B,5,6 * | 1-15 | |
| X | US 2003/231453 A1 (SHEA JOHN J [US]) 18 December 2003 (2003-12-18) * paragraphs [0055] – [0058], [0065], [0071] – [0076], [0078], [0080]; claim 22; figures 8A, 8B, 8C, 9, 10, 11,12A * | 1-15 | |
| A | US 2012/044600 A1 (ROSCOE GEORGE WILLIAM [US] ET AL) 23 February 2012 (2012-02-23) * paragraph [0018]; figure 1 * | 1-15 | |
| | | | TECHNICAL FIELDS SEARCHED (IPC) |
| A | US 8 564 915 B2 (ROSCOE GEORGE WILLIAM [US]; CAGGIANO ROBERT JOSEPH [US] ET AL.) 22 October 2013 (2013-10-22) * column 4, line 40 – column 5, line 3; figure 2 * | 1-15 | H01H H02H |

The present search report has been drawn up for all claims

| Place of search | Date of completion of the search | Examiner |
|---|---|---|
| Munich | 26 October 2023 | Ramírez Fueyo, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 3151

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2023

| Patent document cited in search report | | Publication date | Patent family member(s) | | Publication date |
|---|---|---|---|---|---|
| EP 4089866 | A1 | 16-11-2022 | EP 4089866 A1 | | 16-11-2022 |
| | | | WO 2022238322 A1 | | 17-11-2022 |
| US 6693438 | B2 | 17-02-2004 | BR 0300350 A | | 08-09-2004 |
| | | | CA 2417693 A1 | | 12-08-2003 |
| | | | CN 1438489 A | | 27-08-2003 |
| | | | EP 1335466 A2 | | 13-08-2003 |
| | | | MX PA03001127 A | | 21-08-2003 |
| | | | US 2003151414 A1 | | 14-08-2003 |
| US 2003231453 | A1 | 18-12-2003 | NONE | | |
| US 2012044600 | A1 | 23-02-2012 | CN 102435917 A | | 02-05-2012 |
| | | | EP 2424059 A2 | | 29-02-2012 |
| | | | JP 5923254 B2 | | 24-05-2016 |
| | | | JP 2012044861 A | | 01-03-2012 |
| | | | KR 20120018729 A | | 05-03-2012 |
| | | | US 2012044600 A1 | | 23-02-2012 |
| US 8564915 | B2 | 22-10-2013 | CN 102403691 A | | 04-04-2012 |
| | | | EP 2429050 A2 | | 14-03-2012 |
| | | | JP 5890635 B2 | | 22-03-2016 |
| | | | JP 2012060877 A | | 22-03-2012 |
| | | | KR 20120025999 A | | 16-03-2012 |
| | | | US 2012057263 A1 | | 08-03-2012 |

EPO FORM P0459

For more details about this annex : see Official Journal of the European Patent Office, No. 12/82